# EUROPÄISCHE PATENTSCHRIFT

(11) **EP 3 189 728 B1**
(45) Veröffentlichungstag und Bekanntmachung des Hinweises auf die Patenterteilung: **22.08.2018**
(21) Anmeldenummer: 16161098.5
(22) Anmeldetag: 18.03.2016
(51) Int. Cl.: A01K 5/00

(54) **HEUNETZFUTTERRAUFE MIT KLAPPBAREM RAHMEN UND REVERSIBEL INTEGRIERBAREM HEUNETZ**
FEEDING RACK COMPRISING A FOLDABLE FRAME AND A REVERSIBLY ADAPTABLE HAY NET
DISPOSITIF D'ALIMENTATION COMPRENANT UN CADRE RABATTABLE ET UN FILET À FOIN REVERSIBLEMENT ADAPTABLE

(30) Priorität: 09.01.2016 DE 202016000235 U
(43) Veröffentlichungstag der Anmeldung: 12.07.2017
(73) Patentinhaber: Kremer, Helena, 63477 Maintal (DE)
(72) Erfinder: Kremer, Helena, 63477 Maintal (DE)
(74) Vertreter: Müller, Claudia

(56) Entgegenhaltungen:
- US-A- 5 509 377
- US-A- 5 909 717
- US-B1- 8 677 940

## Beschreibung

### Gegenstand der Erfindung

Die vorliegende Erfindung betrifft eine Heunetzfutterraufe nach Anspruch 1, ein Verfahren zu deren Herstellung nach Anspruch 11, und ein Verfahren zu deren Verwendung nach Anspruch 12. Die Heunetzfutterraufe besteht aus einer Kombination aus einem äußeren klappbaren wandfixierbaren Rahmen (2) mit einem inneren, integrierbaren mobilen Rahmen (5) zur Aufnahme eines Heunetzes (3) sowie eine Heunetzfutterraufe (H) mit Rahmen (2), welcher über geeignete Befestigungsmittel wie äußerer unterer Befestigungsstange (6) oder/und innerer oberer Befestigungsleiste/stange (7) zum Anbringen an einer dafür vorgesehenen, insbesondere senkrechten Fläche wie Wand, Tür, Gitterstäben u.ä. befestigbar bzw. arretierbar und nach vorne ausklappbar bzw. von vor allem von unten nach oben schließbar ist. Der Rahmen (2) kann über Verschlussmittel (4) im zusammengeklappten Zustand arretiert werden. Die Verschlussmittel (4) können am Rahmen (2) oder an den Befestigungsmitteln (7) angeordnet sein. Vorteilhafterweise ist der Rahmen (2) z. B. über geeignete Mittel (1) wie insbesondere Scharniere (1) oder Gelenke klappbar. Der Rahmen (2) ist erfindungsgemäß mit einer an seine Form angepassten Vorrichtung (5) ausgestattet zur reversiblen Aufnahme, Integration bzw. Herausgabe eines Heunetzes (3). Diese Vorrichtung (5) kann insbesondere ein reversibel zu öffnender bzw. zu schließender Bügel, ein Rahmen oder eine rahmenförmige, insbesondere rechteckige Stange (5), insbesondere ein vor allem rechteckiger oder quadratischer Metallring sein, der z. B. über eine entsprechende Führung wie eine U-förmige Schiene z. B. Winkelprofile des Rahmens (2) in diesen eingeschoben und integriert werden kann. Die Vorrichtung (5) ist wie erläutert an die Form des Rahmens (2) angepasst, kann also wie dieser vorzugsweise rechtwinklig oder quadratisch, oder rautenförmig, oval, halbrund oder Ähnliches sein. Die Vorrichtung (5) ist von kleinerem Ausmaß als der Rahmen (2), um von diesem aufgenommen werden zu können. Um die Vorrichtung (5), insbesondere den Bügel bzw. Rahmen, vor allem Metallring (5) in insbesondere rechteckiger, ovaler, halbrunder oder quadratischer Form wird bzw. ist das Heunetz (3) aufgezogen oder ggf. durch hier vorhandene Schlaufen eingezogen. Die Verschlussvorrichtung (4) zur Arretierung des von unten nach oben zu klappenden Rahmenteils kann vor allem ein an den Rahmen (2) angepasster Drehverschluss oder Steckverschluss (4) sein.

In einer bevorzugten Ausführungsform umfasst die Vorrichtung (H) eine an die Wand montierbare obere Befestigungsstange oder Befestigungsleiste (7). Diese umfasst vorteilhafterweise eine verschiebbare Abdeckung als Verschlussvorrichtung (4), insbesondere einen Verschlussbügel (4), welcher nach Einklappen des mit dem Rahmen und Heunetz (5,3) versehenen Teils des Rahmens (2) über diesen geschoben werden kann. Eine zusätzliche Arretierung mit Befestigungsmitteln (8) wie ein oder mehrere Sicherheitsriegel ist ebenfalls ohne großen Aufwand und ohne Verletzungsgefahr möglich.
Die Vorrichtung (H) kann vorteilhafterweise auch eine äußere untere und/oder äußere obere Befestigungsstange (6, 6') und/oder insbesondere eine innere obere Befestigungsstange oder -leiste (7) umfassen. Erfindungsgemäß handelt es sich in diesem Fall um eine Kombination aus Rahmen (2) mit Rahmen (5) und Heunetz (3) zusammen mit den Befestigungsmitteln (6, 7). Dabei können insbesondere Scharniere oder Gelenke (1) am Rahmen (2) und/oder ein Verschlussmittel (4), vor allem ein Verschlussbügel (4) am Befestigungsmittel (7) und/oder Sicherheitsriegel (8) dazu vorhanden sein. Bevorzugt sind Scharniere (1) und ein Verschlussbügel (4), vor allem zusammen mit einem oder mehreren Sicherheitsriegeln (8), in der Kombination mit Rahmen (2), Rahmen (5), Heunetz (3) und Befestigungsstange (7) vorhanden.

In den Unteransprüchen sind weitere bevorzugte Ausführungsformen dargestellt.

Die erfindungsgemäße Heunetzfutterraufe bzw. Kombination eignet sich insbesondere zur Verwendung in der Landwirtschaft, bei der Fütterung von Tieren, insbesondere von Pferden.

### Stand der Technik

Heunetzfutterraufen handelsüblicher Art bestehen bisher aus Metallstreben oder Plastikbehältern, die nach oben zur Befüllung offen gehalten sind. Das Volumen sowie das teilweise starre Material, das in den freien Raum reicht, kann einerseits zu Verletzungen der Tiere führen, anderseits wird das Raufutter von der oberen Öffnung von den Tieren herausgeholt und zertreten. Somit findet eine Raufutterverschwendung statt. Handelsübliche Heunetze beugen der Verschwendung zwar vor, sind aber immer sehr umständlich zu befüllen.
Um diesem Problem entgegenzutreten, wurde gemäß DE GM 20 2012 001 400 U1 eine Konstruktion entwickelt, bestehend aus einem klappbaren und verschließbaren Rahmen, der Halterungen aufweist zur Wandbefestigung und mit gebohrten Löchern ausgestattet ist zur Aufnahme eines Heunetzes z. B. über Karabinerhaken. Dadurch ist es möglich, dass der Heusack leicht auseinandergezogen werden und befüllt werden kann, ohne dass das Netz verknotet. Darüber hinaus kann eine Verschwendung des Futters weitgehend vermieden werden, da die Tiere nicht im Heu oder dergleichen herumstöbern müssen.

In einer weiteren Entwicklung dieser Art wurde eine wie oben beschriebene gattungsgemäße Heunetzraufe als Eckkonstruktion ausgebildet, siehe GM 20 2012 006 649 U1. Dabei ist der klappbare und schließbare Metallbügel, an dem ein Heunetz angebunden ist, so konstruiert, dass er in die Ecke einer Wand befestigt werden kann. In offenem Zustand kann das Heunetz leicht befüllt werden. Danach kann der Rahmen zur Ecke hin eingeklappt werden. Er liegt flach an der Wand und stellt auf diese Weise keine Gefahr für die das Futter herausziehenden Tiere dar. Darüber hinaus ist diese Raufe platzsparend, da sie flach an der Wand anliegt. Der Metallbügel ist so konstruiert, dass er in jeder Ecke platzsparend mit Schrauben zu befestigen ist.
Eine andere Ausgestaltung gattungsgemäßer Futterraufen ist in DE GM 20 2014 000 674 U1 beschrieben. Hierbei handelt es sich um einen beidseitig klappbaren und zur Mitte der Konstruktion hin verschließbaren Bügel mit einer verschiebenden, ausziehbaren Stange - wobei hier durch Anbringen dünner Metallstangen an den Seitenteilen und an der vorderen verschiebbaren Stange, die Netze leichter anzubringen und zu wechseln sind. Auch hier ist das Netz in offenem Zustand von jeder Person leicht zu befüllen. Die Konstruktion wird nach vorne mittig mittels beider Bügel verschlossen und stellt dann ebenfalls keine Verletzungsgefahr für die Tiere dar, da der Rahmen zusammen geschoben und zusammen geklappt fast flach an der Wand aufliegt. Allerdings besteht hier noch das Problem, das keine leichte, mobile Befüllung möglich ist.
US 8 677 940 B1 beschreibt eine Futterraufe aus einem an einer Wand oder Ähnlichem befestigbaren Rahmen, der an einer Stelle einen Steckverschluss aufweist. In diesen Rahmen kann ein Heunetz wie bereits vorstehend geschildert eingezogen werden.
US 5, 509, 377 betrifft eine Box mit einem nach oben aufklappbaren Deckel und einem Haltegriff um die Box, welcher nach vorne ausziehbar ist. Das Heu wird in die Box gefüllt und kann mit einer mit Öffnungen versehenen Platte (Sieb) bedeckt werden, um das Herausfallen des Heus zu verhindern. US 5, 509 717 offenbart eine tragbare FütterungsVorrichtung in Form eines Koffers mit einer darin angebrachten, mit Öffnungen versehenen Innentasche, welche über Scharniere mit dem Kofferdeckel bewegt bzw. aufgeklappt werden kann. Das innerhalb des Koffers befindliche Fütterungsmittel kann über die Öffnungen der Innentasche herausgriffen werden. Die beiden vorgenannten Konstruktionen sind eher starre Systeme mit einer dadurch möglichen konstruktionsbedingten Verletzungsgefahr für Tiere.

### Aufgabe vorliegender Erfindung

Trotz der beschriebenen Verbesserungen bleibt das Problem bestehen, Heunetze an den jeweiligen Vorrichtungen anzubringen. Ferner muss bei den derzeitigen Konstruktionen das Heunetz jeweils am Anbringungsort befüllt werden, da es in die Vorrichtung integriert ist. Das Futter muss also dorthin zunächst verbracht werden.

Der vorliegenden Erfindung liegt daher das Problem zugrunde, eine Vorrichtung gattungsgemäßer Art bereitzustellen, bei der bzw. mittels der die oben geschilderten Probleme vermieden werden können. Dazu soll eine Futterraufe bereitgestellt werden, die sowohl leicht zu befüllen als auch einfach handzuhaben und insofern mobil ist und sicher angebracht und verschlossen werden kann, um weiterhin Verletzungen der Tiere sowie Futterverschwendung zu vermeiden.

### Lösung dieser Aufgabe

Diese Aufgabe wird erfindungsgemäß gelöst durch eine Kombination aus einem klappbaren äußeren, vor allem rechtwinkligen oder quadratischen Rahmen (2) mit einem darin integrierten bzw. integrierbaren und formadaptierten inneren Rahmen (5) zur Aufnahme eines über diesen Rahmen (5) einziehbaren Heunetzes (3). Insbesondere handelt es sich um eine Vorrichtung (H) mit einem Heunetz (3), das in eine Vorrichtung (5) integriert ist, welche von einem an eine Wand, ein Gitter oder Gitterstäbe z. B. einer Tierbox, oder ähnliches befestigbaren, nach vorne ausklappbaren, vorzugsweise verschließbaren Rahmen (2) aufgenommen, d. h. darin eingeschoben und herausgezogen werden kann. Ferner weist bzw. umfasst die erfindungsgemäße Kombination oder Vorrichtung (H) vorzugsweise einen sicheren Verschluss (4) zum Befestigen des ausklappbaren Teils des Rahmens (2) zusammen mit dem integrierten Heunetzteil (5, 3) am an der Wand und Ähnlichem befestigten Rahmenteil (2), insbesondere der Befestigungsstange oder Befestigungsleiste (7) auf.

Insofern betrifft die Erfindung eine Heunetzfutterraufe (H), umfassend ein Heunetz (3) sowie einen nach vorne unten ausklappbaren und vorzugsweise mit Befestigungsmitteln (6), (6') zum Anbringen an einer Fläche wie Wand, Tür, Gitterstäben kombinierbaren Rahmen (2), die dadurch gekennzeichnet ist, dass der Rahmen (2) mit einer an die Form des Rahmens (2) angepassten und in diesen integrierbaren Vorrichtung (5) zur reversiblen Aufnahme, Integration bzw. Herausgabe eines Heunetzes (3) ausgestattet ist und vorzugsweise eine Verschlussvorrichtung (4) für die Arretierung des Rahmens im zusammengeklappten Zustand umfasst.
Bevorzugt ist die Vorrichtung (5) ein im Bezug auf den Rahmen (2) kleinerer reversibel verschließbarer bzw. zu öffnenden Rahmen (5) gleicher Form.

Es ist ferner von Vorteil, wenn die Kombination oder Vorrichtung (H) ein Befestigungsmittel (7), vor allem eine innere obere Befestigungsleiste oder -stange (7) und/oder eine äußere obere und/oder äußere untere Befestigungsstange (Befestigungsmittel) (6), (6') umfasst. Besonders geeignet sind Vorrichtungen/Kombinationen (H) mit einer Befestigungsleiste oder -stange (7), oder Vorrichtungen (H) mit oberer und unterer Leiste (6, 6') oder mit Kombinationen von (7) und (6,6').

In einer anderen bevorzugten Ausführungsform ist der Rahmen (2) mit winklig angeordneten Scharnieren (1) ausgestattet.

Die Verschlussvorrichtung (4) zur Arretierung des von unten nach oben zu klappenden Rahmenteils (2) kann vor allem ein an den Rahmen (2) angepasster, d.h. mit diesem mitwirkender Drehverschluss oder Steckverschluss sein, der insbesondere am Befestigungsmittel (7) angeordnet ist.

Insbesondere ist die Verschlussvorrichtung (4) ein an der Befestigungsstange (7) fest integrierter Verschlussbügel (4) zum Schieben über den eingeklappten Rahmen (2).
Von besonderem Vorteil sind auch Raufen der beschriebenen Art, worin ein Verschlussbügel (4) und weiterhin ein oder mehrere Sicherheitsriegel (8) vorhanden sind.

In erfindungsgemäßen Heunetzraufen bestehen der Rahmen (2) und/oder der Rahmen (5) vorteilhafterweise aus Edelstahl, pulverbeschichtetem Metall oder verzinktem Metall.

### Beschreibung der Abbildungen

Figur 1 zeigt eine geöffnete Heunetzraufe (H) mit Rahmen (2) und herausziehbarem, kleinerem, zu öffnendem und schließendem Rahmen (5), mit aufgenommenem Heunetz (3), der wie eine Schublade herein und herausgeschoben und vollständig herausgenommen werden kann.
Figur 2 zeigt eine geschlossene Heunetzraufe (H) mit oberer, innerer Befestigungsleiste (7) mit integrierter Verschlussvorrichtung (4) und dort integriertem Sicherheitsriegel (8) sowie aufgenommenem Heunetz (3).
In Figur 3 ist die äußere untere sowie äußere obere Befestigungsstange (6), (6') mit Bohrlöchern für die Verschraubung dargestellt.
In Figur 4 ist die innere obere Befestigungsstange (7) mit integriertem Verschlussbügel (4) und integriertem Sicherheitsriegel (8) dargestellt.
In Figur 5 ist die Anordnung gemäß Figur 4 dargestellt, worin jedoch statt eines Bügels (4) ein Drehverschluß (4) vorhanden ist.

### Nähere Erläuterung der Erfindung

Die in vorliegender Erfindung beschriebene Heunetzfutterraufe (H) umfasst einen verschließbaren und ausklappbaren Rahmen (2), welcher vorzugsweise geeignete Verschlussmittel (4) für den zusammengeklappten Zustand aufweist. Er kann vor allem Scharniere (1) umfassen, um die Klappbarkeit zu ermöglichen. Die Raufe (H) ist insbesondere dadurch gekennzeichnet, dass der Rahmen (2) mit einer an dessen Form angepassten Vorrichtung (5) ausgestattet ist zur reversiblen Aufnahme und Integration eines Heunetzes (3). Diese Vorrichtung (5) ist erfindungsgemäß ein kleinerer Rahmen wie vor allem ein rechtwinkeliger oder quadratischer, oder auch ovaler oder runder Bügel (5) - je nach Form des Rahmens (2) -, der z. B. über eine entsprechende Führung wie eine U-förmigen Schiene oder Winkelprofile des Rahmens (2) in diesen eingeschoben, oder eingezogen ist. Die Vorrichtung (5) ist insofern mobil. Insbesondere ist die Vorrichtung (5) ein Rahmen, der im Verhältnis zu (2) etwas kleiner und reversibel zu öffnen und zu verschließen ist. Dadurch kann ein Heunetz (3) z. B. um den Bügel/Rahmen (5) mit Schlaufen des Netzes einfach eingezogen werden, ohne dass es besonderer Befestigungsmittel hierzu bedarf. Erfindungsgemäß können also in diesen kleineren Rahmen (5) Heunetze (3) schnell und einfach gewechselt werden. Karabinerhaken werden dafür nicht mehr benötigt. Der kleinere Rahmen (5) mit Heunetz (3) kann zwecks Befüllung auch an jeden beliebigen Ort mitgenommen werden. Das befüllte Heunetz (3) kann sodann in den an der Wand oder Gitterstäben befestigten Rahmen (2) hineingeschoben und dieser nach oben geklappt und mit einem geeigneten Verschlussmittel oder Verschlussvorrichtung(en) (4) verschlossen werden.

Das Verschlussmittel (4) zur Arretierung/Befestigung des klappbaren Teils des Rahmens (2) in die Verschlussposition kann vor allem ein an den Rahmen (2) angepasster Drehverschluss, ein Steckverschluss (4) oder insbesondere ein über den oberen Teil des Rahmens (2) schiebbarer Verschlussbügel (4) sein.

Der Rahmen (2) bzw. die Verschlussvorrichtung (4) sowie die Vorrichtung (Rahmen) (5), und Mittel (6, 7), Scharniere (1), Riegel u .ä. (8) sind insbesondere aus Metall, vor allem Edelstahl, oder Stahl, oder aus verzinktem Metall/Blech, Metall vergoldet, Metall versilbert, Chrom, oder Ähnlichem. Alternativ können hier auch Verbundwerkstoffe, Plastik, Hartgummi und Holz jeweils aller Art insgesamt oder für Teile der Konstruktion verwendet werden.

Bevorzugt werden diese Vorrichtungen aus Metall, vor allem Edelstahl, oder verzinktem Metall verwendet.
Das Heunetz (3) ist aus bekanntem flexiblen Material wie Polypropylen bzw. Polyester, welche dem Fachmann bekannt sind.

Mit der Erfindung wird erreicht, dass in den klappbaren und verschließbaren Rahmen (2) eine zu öffnende und zu schließende Vorrichtung (5), z. B. ein kleinerer Rahmen, integrierbar und herausziehbar bzw. wieder einschiebbar ist. In diese Vorrichtung (5) z. B. den kleineren Rahmen, können Heunetze (3) schnell und einfach aufgezogen (d.h. durchgezogen) oder gewechselt werden. Da es sich bei (5) um eine nicht flexible Konstruktion handelt, bleibt das Heunetz bei herausgeklapptem Rahmen (2) immer offen und gewährleistet somit ein leichtes Befüllen des Netzes. Karabinerhaken zur Befestigung des Netzes, die auch ein Verletzungsrisiko für die Tiere darstellen und in den o.g. bisher bekannten Vorrichtungen verwendet werden müssen, sind erfindungsgemäß nicht mehr nötig. Die Vorrichtung (5), insbesondere in Form eines kleineren Rahmens (5) mit aufgenommenem Netz (3) kann nach vorne herausgenommen bzw. - gezogen werden und an jeden beliebigen Ort - zum leichten Befüllen - mitgenommen werden. Das befüllte Heunetz (3) wird dann in den nach unten geklappten Teil des mit der Befestigungsstange oder -leiste (6, 7) an der Wand oder Gitterstäben befestigten Rahmens (2) hinein geschoben. Der untere Teil des Rahmens (2) wird von unten nach oben hochgeklappt und vor allem mit dem Verschlussmittel (4), insbesondere mit einem von oben überziehbaren Verschlußbügel (4) verschlossen. Bevorzugt kann dieser dann zusätzlich mit einem oder mehreren, bevorzugt zwei integrierten Sicherheitsriegeln (8) gesichert werden.
Die Kombination des klappbaren Rahmens (2) mit dem integriertem kleinerem Rahmen (5) und dem Heunetz (3) gewährleistet lange Fresszeiten für die Tiere. Da beim Hochklappen des Rahmens (2) das Heunetz (3) verschlossen wird, kann keine Futterverschwendung stattfinden. Durch das Hochklappen und somit flachem Anliegen des Rahmens (2) an Wänden oder Gitterstäben einer Tierbox besteht keine Verletzungsgefahr mehr für die Tiere.

### Beispiele

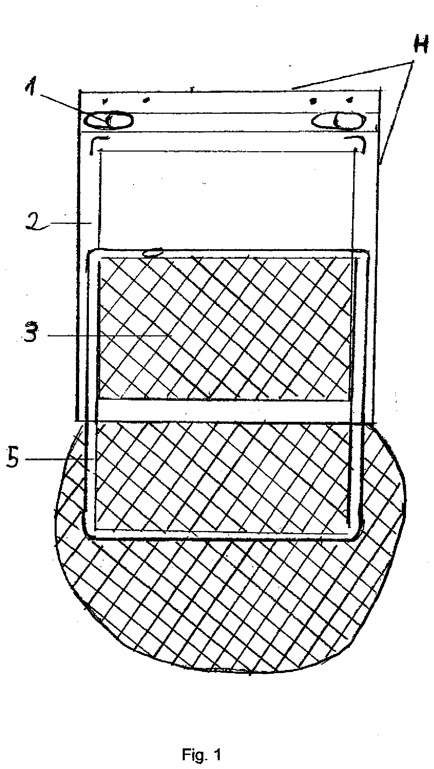

Die Erfindung wird im folgenden Ausführungsbeispiel anhand der Figuren 1 bis 5 erläutert.

Wie Figur 1 dargestellt, wird, nachdem der Rahmen (2) über Scharniere (1), insbesondere Metallscharniere, nach unten (vorne) heraus geklappt wurde, das an den kleineren, vor allem zu öffnenden und zu schließenden Rahmen oder rechteckiges Gestänge (5), insbesondere zu öffnenden und zu schließenden Metallring, integrierte Heunetz (3) geöffnet. Es kann mittels (5) z.B. über Führungsschienen/-Winkelprofile wie eine Schublade herein und herausgeschoben oder -gezogen und vollständig herausgenommen werden. In dieser Position kann das Futtermittel, wie vor allem Heu eingefüllt werden. Alternativ kann der kleinere Rahmen mit integriertem Heunetz mobil an jeden anderen Ort zum Befüllen mitgenommen werden. Danach wird der kleinere Rahmen (5) mit befülltem Heunetz (3) in den Rahmen (2) nach vorne wie eine Schublade hineingeschoben. Der Rahmen (2) wird dann mit dem befüllten Heunetz (3) nach oben geklappt.

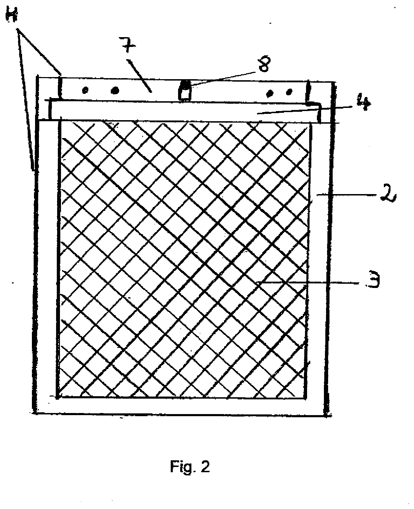

Wie aus Figur 2 ersichtlich, kann nach dem Einklappen des Rahmens (2) der Verschluss (4), hier der Bügel (4), übergezogen werden. Es entsteht nach der Arretierung mit dem Verschlussbügel (4) mit hier bevorzugt vorhandenem(n) integriertem(n) Sicherheitsriegel(n) (8) die geschlossene Heunetzraufe (H) mit integriertem Heunetz (3). Aus diesem können die Tiere dann leicht und verletzungs- bzw. verschwendungsfrei Futter entnehmen.

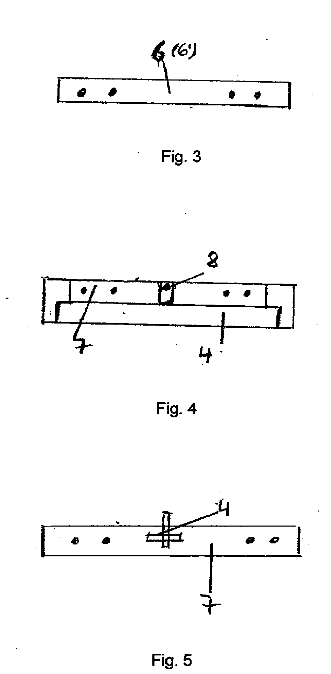

In Figur 3 ist die die äußere untere sowie obere Befestigungsstange (6), (6') für den Rahmen (2) mit Bohrlöchern für die Verschraubung dargestellt. Diese wird insbesondere erforderlich, wenn der Rahmen (2) der Vorrichtung (H) an Gitterstäbe angebracht werden soll. Für eine Wandanbringung sind die Befestigungsmittel (6, 6') nicht zwingend erforderlich.

In der Figur 4 ist die obere, innere Befestigungsstange (7) mit integriertem Verschlussbügel (4) und integriertem Sicherheitsriegel (8) dargestellt. Wie ersichtlich, kann der der Bügel seitlich hochgeschoben werden, sodann der Rahmen (2) nach unten geklappt werden.

Figur 5 zeigt die Konstruktion gemäß Figur 4, jedoch mit einem Steckverschluss (4) statt Verschlussbügel (4).

## Patentansprüche

1. Heunetzfutterraufe (H), umfassend ein Heunetz (3) sowie einen Rahmen (2), **dadurch gekennzeichnet, dass** die Vorrichtung einen äußeren Rahmen (2) umfasst, der nach vorne unten ausklappbar und an einer Fläche (F) wie Wand, Tür, Gitterstäben befestigbar und arretierbar ist, wobei der Rahmen (2) mit einer an die Form des Rahmens (2) angepassten und in diesen integrierten inneren, bzgl. des äußeren Rahmens (2) kleineren mobilen Vorrichtung in Form eines Rahmens (5) zur reversiblen Aufnahme, Integration bzw. Herausgabe des Heunetzes (3) ausgestattet ist, wobei der Rahmen (5) in den Rahmen (2) eingeschoben oder eingezogen ist.

2. Raufe nach Anspruch 1, **dadurch gekennzeichnet, dass** sie ein Befestigungsmittel (7) umfasst, an welchem ein oder mehrere Verschlussmittel (4) für die Arretierung des Rahmens (2) im zusammengeklappten Zustand angeordnet sind.

3. Heunetzraufe nach Anspruch 1 oder 2, **dadurch gekennzeichnet, dass** die Vorrichtung (5) ein in Bezug auf den Rahmen (2) kleinerer reversibel verschließbarer bzw. zu öffnenden Rahmen (5) ist und beide Rahmen (2), (5) quadratisch oder rechtwinklig sind.

4. Heunetzraufe nach einem der Ansprüche 1 bis 3, **dadurch gekennzeichnet, dass** Befestigungsmittel (6), (6') in Form einer äußeren unteren sowie äußeren oberen Befestigungsstange (6), (6') umfasst sind.

5. Heunetzraufe nach einem der Ansprüche 1 bis 4, **dadurch gekennzeichnet, dass** der Rahmen (2) mit winklig angeordneten Scharnieren (1) ausgestattet ist.

6. Heunetzraufe nach einem der Ansprüche 2 bis 5, **dadurch gekennzeichnet, dass** das Verschlussmittel (4) zur Arretierung des von unten nach oben zu klappenden Rahmenteils des Rahmens (2) ein an den Rahmen (2) angepasster und im Befestigungsmittel (7) integrierter Dreh- oder Steckverschluss (4) ist.

7. Heunetzraufe nach einem der Ansprüche 2 bis 6, **dadurch gekennzeichnet, dass** das Verschlussmittel (4) ein am Befestigungsmittel (7) in Form einer Befestigungsstange (7) angeordneter, fest integrierter Verschlussbügel (4) zum Schieben über den eingeklappten Rahmen (2) ist.

8. Heunetzraufe nach Anspruch 7, **dadurch gekennzeichnet, dass** das Befestigungsmittel (7) eine Befestigungsstange oder Befestigungsleiste (7) ist, welche neben dem Verschlussbügel (4) ein oder mehrere Sicherheitsriegel (8) aufweist.

9. Heunetzraufe nach einem der Ansprüche 1 bis 8, **dadurch gekennzeichnet, dass** der Rahmen (2) aus Edelstahl, verzinktem Metall, oder pulverbeschichtetem Metall besteht.

10. Heunetzraufe nach einem der Ansprüche 1 bis 9, **dadurch gekennzeichnet, dass** die Vorrichtung (5), insbesondere der Rahmen oder Ring (5), aus Edelstahl, verzinktem Metall, oder pulverbeschichtetem Metall besteht.

11. Verwendung einer Kombination aus einem klappbaren äußeren rechtwinkligen, quadratischen, rautenförmigen oder ovalen Rahmen (2) und einem kleineren darin integrierten eingeschobenen oder eingezogenen und an den Rahmen (2) formadaptierten inneren Rahmen (5) zur Herstellung einer Heunetzfutterraufe (H) gemäß einem der Ansprüche 1 bis 10.

12. Verwendung einer Heunetzfutterraufe gemäß einem der Ansprüche 1 bis 10 in der Landwirtschaft bei der Fütterung von Tieren, insbesondere von Pferden.

## Claims

1. A hay net feeding rack (H) comprising a hay net (3) and a frame (2), **characterised in that** the device comprises an outer frame (2) which can be pivoted out downwards and forwards and fastened and locked to an area (F) such as a wall, door or bars, wherein the frame (2) is equipped with an inner mobile device, which is adapted to the shape of the frame (2) and integrated therein, is smaller than the outer frame (2) and takes the form of a frame (5) for reversibly accommodating, integrating or deploying the hay net (3), wherein the frame (5) is inserted or withdrawn into the frame (2).

2. A feeding rack according to claim 1, **characterised in that** it comprises fastening means (7) on which are arranged one or more closure means (4) for locking the frame (2) in the pivoted together state.

3. A hay net feeding rack according to claim 1 or 2, **characterised in that** the device (5) is a reversibly closable or openable frame (5) which is smaller than the frame (2) and the two frames (2), (5) are square or rectangular.

4. A hay net feeding rack according to one of claims 1 to 3, **characterised in that** it comprises fastening means (6), (6') in the form of an outer lower and outer upper fastening rod (6), (6').

5. A hay net feeding rack according to one of claims 1 to 4, **characterised in that** the frame (2) is equipped with hinges (1) arranged at the corners.

6. A hay net feeding rack according to one of claims 2 to 5, **characterised in that** the closure means (4) for locking the part of the frame (2) which is to be pivoted from the bottom upwards is a rotating or plug closure (4) adapted to the frame (2) and integrated in the fastening means (7).

7. A hay net feeding rack according to one of claims 2 to 6, **characterised in that** the closure means (4) is a closure bracket (4) arranged on the fastening means (7) in the form of a fastening rod (7) to be slid over the pivoted in frame (2).

8. A hay net feeding rack according to claim 7, **characterised in that** the fastening means (7) is a fastening rod or fastening strip (7) which, in addition to the closure bracket (4), comprises one or more safety bolts (8).

9. A hay net feeding rack according to one of claims 1 to 8, **characterised in that** the frame (2) consists of stainless steel, galvanised metal or powder-coated metal.

10. A hay net feeding rack according to one of claims 1 to 9, **characterised in that** the device (5), in particular the frame or ring (5), consists of stainless steel, galvanised metal, or powder-coated metal.

11. Use of a combination of a pivotable outer rectangular, square, rhomboidal or oval frame (2) and a smaller integral inner frame (5) inserted or withdrawn therein and adapted in shape to the frame (2) for producing a hay net feeding rack (H) according to one of claims 1 to 10.

12. Use of a hay net feeding rack according to one of claims 1 to 10 in agriculture for feeding livestock, in particular horses.

## Revendications

1. Râtelier de fourrage à filet à foin (H), comprenant un filet à foin (3) ainsi qu'un cadre (2), **caractérisé en ce que** le dispositif comprend un cadre externe (2) qui peut être rabattu vers l'avant et le bas et fixé et bloqué au niveau d'une surface (F) comme une paroi, une porte, des barreaux de grille, dans lequel le cadre (2) est équipé d'un dispositif mobile interne en forme de cadre (5), plus petit par rapport au cadre externe (2), adapté à la forme du cadre (2) et intégré dans celui-ci en vue d'un logement, d'une intégration ou d'une restitution réversible du filet à foin (3), dans lequel le cadre (5) est introduit en glissant ou rentré dans le cadre (2).

2. Râtelier selon la revendication 1, **caractérisé en ce qu'**il comprend un moyen de fixation (7) au niveau duquel un ou plusieurs moyens de fermeture (4) sont disposés pour le blocage du cadre (2) à l'état replié.

3. Râtelier à filet à foin selon la revendication 1 ou 2, **caractérisé en ce que** le dispositif (5) est un cadre (5) plus petit par rapport au cadre (2), refermable resp. à ouvrir de manière réversible et les deux cadres (2), (5) sont quadratiques ou rectangulaires.

4. Râtelier à filet à foin selon l'une des revendications 1 à 3, **caractérisé en ce que** des moyens de fixation (6), (6') en forme de barre de fixation externe (6) (6') inférieure ainsi qu'externe supérieure sont inclus.

5. Râtelier à filet à foin selon l'une des revendications 1 à 4, **caractérisé en ce que** le cadre (2) est équipé de charnières (1) disposées de manière angulaire.

6. Râtelier à filet à foin selon l'une des revendications 2 à 5, **caractérisé en ce que** le moyen de fermeture (4) destiné au blocage de la partie de cadre du cadre (2) à rabattre du bas vers le haut est une fermeture rotative ou encliquetable (4) adaptée au cadre (2) et intégrée dans le moyen de fixation (7).

7. Râtelier à filet à foin selon l'une des revendications 2 à 6, **caractérisé en ce que** le moyen de fermeture (4) est un étrier de fermeture (4) intégré solidement et disposé au niveau du moyen de fixation (7) en forme de barre de fixation (7) destiné au glissement sur le cadre (2) rabattu.

8. Râtelier à filet à foin selon la revendication 7, **caractérisé en ce que** le moyen de fixation (7) est une barre de fixation ou une baguette de fixation (7), laquelle présente à côté de l'étrier de fermeture (4) un ou plusieurs taquets de sécurité (8).

9. Râtelier à filet à foin selon l'une des revendications 1 à 8, **caractérisé en ce que** le cadre (2) se compose d'acier inoxydable, de métal galvanisé ou de métal laqué.

10. Râtelier à filet à foin selon l'une des revendications 1 à 9, **caractérisé en ce que** le dispositif (5), en particulier le cadre ou la bordure (5), se compose d'acier inoxydable, de métal galvanisé ou de métal laqué.

11. Utilisation d'une combinaison constituée à partir d'un cadre (2) rabattable externe rectangulaire, quadratique, en losange ou ovale et d'un cadre interne (5) plus petit intégré dans le cadre (2), introduit en glissant ou rentré et adapté par la forme au cadre (2) destiné à la fabrication d'un râtelier de fourrage à filet à foin (H) selon l'une des revendications 1 à 10.

12. Utilisation d'un râtelier de fourrage à filet à foin selon l'une des revendications 1 à 10 dans l'agriculture lors de l'affouragement des animaux, en particulier des chevaux.
